# EUROPÄISCHE PATENTSCHRIFT

(11) **EP 3 853 462 B1**
(45) Veröffentlichungstag und Bekanntmachung des Hinweises auf die Patenterteilung: **16.04.2025**
(21) Anmeldenummer: 19769477.1
(22) Anmeldetag: 16.09.2019
(51) Int. Cl.: F02F 3/14, F02B 23/06

(54) **KOLBEN FÜR EINE BRENNKRAFTMASCHINE**
PISTON FOR AN INTERNAL COMBUSTION ENGINE
PISTON POUR MOTEUR À COMBUSTION INTERNE

(30) Priorität: 21.09.2018 DE 102018123275
(43) Veröffentlichungstag der Anmeldung: 28.07.2021
(73) Patentinhaber: MAN Truck & Bus SE, 80995 München (DE)
(72) Erfinder: MALISCHEWSKI, Thomas, 91560 Heilsbronn (DE); DIETRICH, Jens, 91560 Heilsbronn (DE); ZÜLOW, Daniel, 90537 Feucht (DE)
(74) Vertreter: v. Bezold & Partner Patentanwälte - PartG mbB
(86) Internationale Anmeldenummer: PCT/EP2019/074694
(87) Internationale Veröffentlichungsnummer: WO 2020/058185

(56) Entgegenhaltungen:
- WO-A1-85/01314
- WO-A2-2017/146598
- DE-A1- 1 939 435
- DE-A1- 2 545 589
- US-A- 1 506 252
- US-A- 2 865 346

## Beschreibung

Die Erfindung betrifft einen Kolben für eine Brennkraftmaschine.

Bei konventionellen Brennkraftmaschinen sind die Kolben aus Aluminium oder Stahl gefertigt. Obwohl diese beiden Materialien sehr große Unterschiede im Bereich der Wärmeleitfähigkeit aufweisen, ist die effektive Wärmeabfuhr im direkten Vergleich über beide Varianten sehr ähnlich. Eine Erklärung für dieses Phänomen kann darin liegen, dass der Wärmeübergangskoeffizienten von der Flamme zur Brennraumoberfläche von der jeweiligen Wandtemperatur abhängt. Somit hat der Stahlkolben zwar eine höhere Wandtemperatur als der Aluminiumkolben, jedoch steigen dadurch auch der Wärmeübergangskoeffizient und der Wärmestrom.

Die DE 38 14 427 A1 offenbart eine Hubkolbenbrennkraftmaschine mit Selbstzündung, bei der mindestens bei einem Teil der den Brennraum begrenzenden Wände die Wärmeableitung auf das die Wände umgebende Material über zwischen den Wänden und dem sie umgebenden Material vorgesehene Wärmebrücken erfolgt. Die Wärmebrücken werden während der Warmlaufphase und im Teillastbetrieb der Brennkraftmaschine zwecks Temperaturerhöhung mindestens teilweise durch Bildung von Luftspalten unterbrochen.

Die US 4,018,194 A offenbart einen Kolben für eine Brennkraftmaschine mit einer Oberseite, die einen Teil einer Brennkammer bildet. Der Kolben ist mit einem Hohlraum oder einer tiefen Vertiefung in der Oberseite versehen, um die Kraftstoff-Luft-Mischung zu fördern und den Verbrennungsprozess in der Brennkammer zu verbessern. Der Hohlraum ist in einem becherförmigen Einsatzteil ausgebildet, das so im Kolbenkörper positioniert ist, dass das becherförmige Einsatzteil im Wesentlichen vom Kolbenkörper beabstandet oder isoliert ist, wodurch Wärmeverluste an den Kolbenwänden vermieden oder minimiert werden.

Die US 2008/0041333 A1 offenbart einen Kolben für einen Verbrennungsmotor, der eine obere Krone mit einer oberen und einer unteren Fläche und eine untere Krone mit einer oberen und einer unteren Fläche aufweist. Die obere Krone und die untere Krone sind durch Schweißnähte fest miteinander verbunden, wobei die Unterseite der oberen Krone und die Oberseite der unteren Krone eine Gegenfläche bilden. Der Kolben hat außerdem mindestens einen mittig auf der Gegenfläche ausgebildeten Luftspalt. Der Luftspalt ist abgedichtet, um einen Luftstrom in den oder aus dem Luftspalt zu verhindern.

Die DE 19 39 435 A1 offenbart einen Muldenkolben für Brennkraftmaschinen, insbesondere aus Aluminium oder einer Aluminiumlegierung, der im Bereich seiner Mulde zur Verminderung der Wärmeableitung Spaltlufträume aufweist. Die Mulde ist mit einem hochhitzebeständigen Blech ausgekleidet, welches gegenüber der Muldenwandung den Spaltraum freilässt.

Zum weiteren relevanten Stand der Technik wird auf die DE 25 45 589 A1, die WO 85/01314 A1, die WO 2017/146598 A2 und die US 1 506 252 A verwiesen.

Der Erfindung liegt die Aufgabe zu Grunde, einen alternativen und/oder verbesserten Kolben für eine Brennkraftmaschine zu schaffen.

Die Aufgabe wird gelöst durch die Merkmale gemäß dem unabhängigen Anspruch 1. Vorteilhafte Weiterbildungen sind in den abhängigen Ansprüchen und der Beschreibung angegeben.

Die Erfindung schafft einen Kolben für eine Brennkraftmaschine (z. B. Diesel-Direkteinspritzung-Brennkraftmaschine und/oder Hubkolben-Brennkraftmaschine). Der Kolben weist einen Kolbenboden zum vorzugsweise kolbenseitigen Begrenzen einer Verbrennungskammer der Brennkraftmaschine auf. Der Kolben weist eine Abdeckung auf, die den Kolbenboden (z. B eine Kolbenmulde des Kolbenbodens) zumindest teilweise abdeckt, vorzugsweise verbrennungskammerseitig. Zwischen der Abdeckung und dem Kolbenboden ist ein wärmeisolierender Spalt, vorzugsweise Luftspalt, gebildet, der in einer (z. B. direkten und/oder indirekten) Fluidverbindung mit der Verbrennungskammer und/oder einer dem wärmeisolierenden Spalt abgewandten Oberseite der Abdeckung ist.

Die Abdeckung ermöglicht, dass eine Flammenfront während der Verbrennung in der Verbrennungskammer den Kolbenboden zumindest teilweise nicht berührt. Der wärmeisolierende Spalt bildet eine Barriere, die eine Wärmeleitung von der Verbrennungskammer zum Kolbenboden verringert. Damit erhöht sich die Oberflächentemperatur des Kolbenbodens nicht so stark wie bei herkömmlichen Kolben ohne Abdeckung. Aufgrund der verringerten Oberflächentemperatur des Kolbenbodens ergibt sich auch ein verringerter Wärmeübergangskoeffizient von der Verbrennungskammer zum Kolben. Folglich muss der Kolben nicht so stark gekühlt werden. Die Fluidverbindung zu dem wärmeisolierenden Spalt ermöglicht zudem, dass ein Fluidaustausch zwischen dem wärmeisolierenden Spalt und der Verbrennungskammer stattfinden kann. Damit kann ein Druckgradient zwischen der Verbrennungskammer und dem wärmeisolierten Spalt verringert werden. Dadurch wird ermöglicht, dass die Abdeckung dünn ausgelegt werden kann, ohne während der Verbrennung verformt zu werden. Dies hat den Vorteil, dass, je dünner die Abdeckung ist, desto weniger Wärme kann die Abdeckung während der Verbrennung aufnehmen. Je weniger Wärme die Abdeckung während der Verbrennung aufnimmt, desto weniger Wärme gibt die Abdeckung beim Ladungswechsel an die Ladeluft ab. Der Liefergrad der Brennkraftmaschine wird so weniger abgesenkt.

Zweckmäßig kann der Kolbenboden ein Bereich eines beispielsweise gegossenen oder gedruckten Hauptkörpers des Kolbens sein.

Vorzugsweise kann die Abdeckung separat von einem Hauptkörper des Kolbens ausgebildet sein.

Es ist möglich, dass der Kolbenboden des Kolbens durch Kühlkanäle im Kolben unterhalb des Kolbenbodens gekühlt ist.

In einem Ausführungsbeispiel ist die Fluidverbindung zum Ermöglichen einer Druckannäherung und/oder eines Druckausgleichs zwischen der Verbrennungskammer und dem wärmeisolierenden Spalt ausgebildet.

In einem weiteren Ausführungsbeispiel wird ein Druck auf der Oberseite der Abdeckung und ein Druck auf einer Rückseite der Abdeckung, die dem wärmeisolierenden Spalt zugewandt ist, während des Betriebs der Brennkraftmaschine durch die Fluidverbindung angenähert und/oder im Wesentlichen ausgeglichen.

In einem weiteren Ausführungsbeispiel ist die Abdeckung so angeordnet, dass sie eine Flammenfront während einer Verbrennung in der Verbrennungskammer von dem Kolbenboden, vorzugsweise einer Kolbenmulde des Kolbenbodens, trennt.

In einem weiteren Ausführungsbeispiel ist die Fluidverbindung beabstandet zu einem Kraftstoff-Einspritzstrahl-Auftreffbereich der Abdeckung angeordnet.

Zweckmäßig kann der Kraftstoff-Einspritzstrahl-Auftreffbereich der Abdeckung durch eine Umlaufkante eines ringförmigen Absatzes einer Kolbenmulde des Kolbenbodens gebildet sein.

Beispielsweise kann die Fluidverbindung oberhalb und/oder unterhalb des Kraftstoff-Einspritzstrahl-Auftreffbereichs angeordnet sein.

In einem weiteren Ausführungsbeispiel ist die Fluidverbindung zumindest teilweise durch mindestens einen Ringspalt zwischen dem Kolbenboden und der Abdeckung gebildet.

Vorzugsweise kann der mindestens eine Ringspalt eine Breite zwischen größer oder gleich 0,5 mm und/oder kleiner oder gleich 2 mm, vorzugsweise ca. 1 mm, aufweisen.

In einer Ausführungsform ist die Fluidverbindung zumindest teilweise durch einen Ringspalt zwischen einer Außenumfangskante der Abdeckung und dem Kolbenboden gebildet.

Beispielsweise kann der Ringspalt zwischen der Außenumfangskante der Abdeckung und dem Kolbenboden oberhalb eines Kraftstoff-Einspritzstrahl-Auftreffbereichs der Abdeckung angeordnet sein.

Zweckmäßig kann der Ringspalt zwischen der Außenumfangskante der Abdeckung und dem Kolbenboden in einer Radialrichtung nach außen beabstandet zu einem Kraftstoff-Einspritzstrahl-Auftreffbereich der Abdeckung angeordnet sein, vorzugsweise koaxial zum Kraftstoff-Einspritzstrahl-Auftreffbereich.

Es ist möglich, dass der Ringspalt zwischen der Außenumfangskante der Abdeckung und dem Kolbenboden an einer Oberseite des Kolbens angeordnet ist.

In einem weiteren Ausführungsbeispiel ist die Fluidverbindung zumindest teilweise durch einen Ringspalt zwischen einer Innenumfangskante der Abdeckung und dem Kolbenboden gebildet sein.

Beispielsweise kann der Ringspalt zwischen der Innenumfangskante der Abdeckung und dem Kolbenboden unterhalb eines Kraftstoff-Einspritzstrahl-Auftreffbereichs der Abdeckung angeordnet sein.

Zweckmäßig kann der Ringspalt zwischen der Innenumfangskante der Abdeckung und dem Kolbenboden in einer Radialrichtung nach innen beabstandet zu einem Kraftstoff-Einspritzstrahl-Auftreffbereich der Abdeckung angeordnet sein, vorzugsweise koaxial zum Kraftstoff-Einspritzstrahl-Auftreffbereich.

In einer weiteren Ausführungsform ist die Fluidverbindung zumindest teilweise durch mindestens ein Durchgangsloch und/oder mindestens einen Durchgangsschlitz der Abdeckung gebildet.

Zweckmäßig können mehrere Durchgangslöcher und/oder mehrere Durchgangsschlitze, vorzugsweise symmetrisch, verteilt in der Abdeckung angeordnet sein.

In einer Weiterbildung sind mehrere Durchgangslöcher und/oder Durchgangsschlitze umfasst, die vorzugsweise beabstandet zu einem Kraftstoff-Einspritzstrahl-Auftreffbereich der Abdeckung angeordnet sind, vorzugsweise oberhalb und/oder unterhalb des Kraftstoff-Einspritzstrahl-Auftreffbereichs der Abdeckung.

Beispielsweise kann das mindestens eine Durchgangsloch einen Durchmesser zwischen 0,5 mm und 5 mm oder mehr aufweisen.

In einer Ausführungsform weist der wärmeisolierende Spalt eine Höhe größer oder gleich 0,5 mm und/oder kleiner oder gleich 2 mm, vorzugsweise ca. 1 mm, auf.

In einer weiteren Ausführungsform weist der wärmeisolierende Spalt eine im Wesentlichen konstante Höhe auf.

Erfindungsgemäß weist der Kolbenboden eine Kolbenmulde auf und die Abdeckung ist zumindest teilweise in der Kolbenmulde angeordnet, vorzugsweise zum zumindest teilweisen Abdecken der Kolbenmulde, und/oder an die Kolbenmulde angepasst. Zweckmäßig kann die Abdeckung als ein Kolben-Inliner oder/oder ein Kolbenmuldeneinsatz ausgebildet sein.

Erfindungsgemäß weist die Kolbenmulde eine zentrale Erhebung auf und die Abdeckung erstreckt sich ringförmig um die zentrale Erhebung oder die Abdeckung deckt die zentrale Erhebung ab.

In einer weiteren Ausführungsvariante ist die Fluidverbindung zumindest teilweise durch einen Ringspalt zwischen einer Außenumfangskante der Kolbenmulde und einer Außenumfangskante der Abdeckung gebildet. Erfindungsgemäß ist die Fluidverbindung zumindest teilweise durch einen Ringspalt zwischen einer Innenumfangskante der Abdeckung und einer zentralen Erhebung der Kolbenmulde gebildet.

In einem Ausführungsbeispiel folgt eine Querschnittskontur der Abdeckung einer Querschnittskontur der Kolbenmulde, vorzugsweise in im Wesentlichen konstanten Abstand.

In einem weiteren Ausführungsbeispiel ist die Kolbenmulde als eine Omegamulde und/oder eine Stufenmulde, vorzugsweise mit einer zentralen Erhebung, ausgebildet, und die Abdeckung weist zumindest teilweise einen omegaförmigen und/oder stufenförmigen Querschnitt auf.

In einer Ausführungsform ist die Abdeckung als ein Blech ausgebildet. Vorzugsweise kann das Blech eine im Wesentlichen konstante Blechstärke aufweisen. Alternativ oder zusätzlich kann das Blech eine Blechstärke größer oder gleich 0,5 mm und/oder kleiner oder gleich 2 mm, vorzugsweise ca. 1 mm, aufweisen.

In einer weiteren Ausführungsform ist die Abdeckung mit dem Kolbenboden, vorzugsweise einer Kolbenmulde des Kolbenbodens, verschweißt, vorzugsweise mittels Punktschweißen und/oder Reibschweißen.

Die Erfindung betrifft auch ein Kraftfahrzeug, vorzugsweise ein Nutzfahrzeug (zum Beispiel Lastkraftwagen oder Omnibus), aufweisend einen Kolben wie hierin offenbart.

Es ist auch möglich, die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
Figur 1 einen Querschnitt durch ein Kolbenoberteil eines Kolbens gemäß einem Ausführungsbeispiel der vorliegenden Offenbarung; und
Figur 2 einen Querschnitt durch ein Kolbenoberteil eines Kolbens gemäß einem nicht erfindungsgemäßen Beispiel der vorliegenden Offenbarung

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

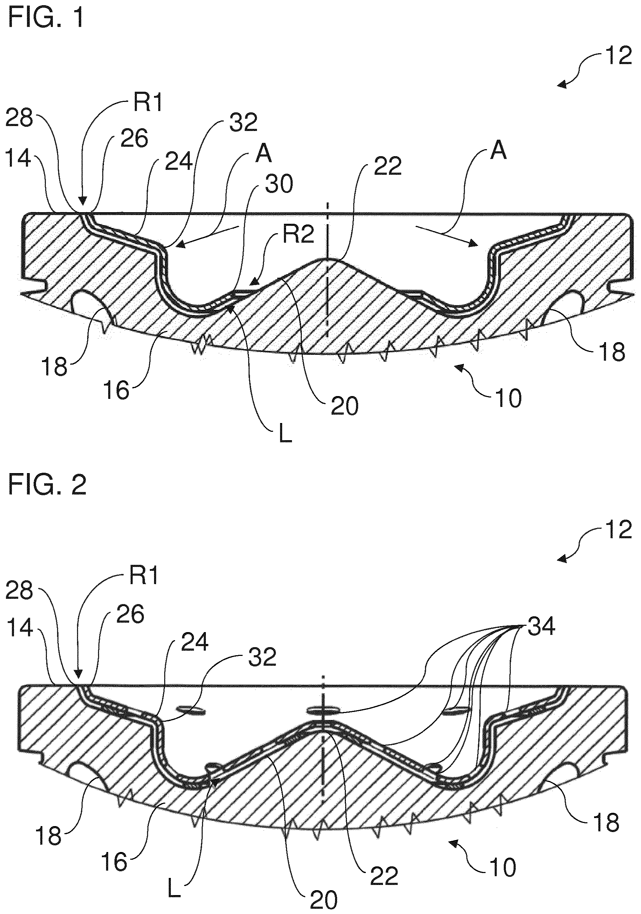

Die Figur 1 zeigt ein Oberteil eines Kolbens 10. Der Kolben 10 kann in einer Brennkraftmaschine umfasst sein. Die Brennkraftmaschine kann beispielsweise eine Diesel-, Benzin- und/oder Gaskraftstoff-Brennkraftmaschine sein. Vorzugsweise kann die Brennkraftmaschine eine Diesel-Brennkraftmaschine mit Direkteinspritzung sein. Die Brennkraftmaschine kann in einem Fahrzeug, z. B. Kraftfahrzeug, Schienenfahrzeug oder Wasserfahrzeug, oder einer stationären Anlage, z. B. zum Antreiben eines Generators oder eines anderen Aggregats, umfasst sein. Vorzugsweise kann die Brennkraftmaschine in einem Nutzfahrzeug, zum Beispiel einem Lastkraftwagen oder einem Omnibus, umfasst sein.

Der Kolben 10 ist auf eine nicht näher dargestellte Weise hin- und herbewegbar in einem Zylinder der Brennkraftmaschine angeordnet, zweckmäßig mittels eines Pleuels, das dem Kolben 10 gelenkig mit einer Kurbelwelle verbindet. Der Kolben 10 begrenzt eine Verbrennungskammer 12 des Zylinders.

Der Kolben 10 weist einen Kolbenboden (auch Kolbendach genannt) 14 auf. Der Kolbenboden 14 bildet eine brennraumseitige Oberseite eines beispielsweise gegossenen oder gedruckten Hauptkörpers 16 des Kolbens 10 aus.

Der Kolben 10 kann zum Kühlen des Kolbenbodens 14 einen oder mehrere Kühlkanäle 18 aufweisen. Innerhalb der Kühlkanäle 18 kann ein Kühlfluid, zum Beispiel Öl, geführt werden, um Wärme vom Kolbenboden 14 aufzunehmen und wegzuführen. Die Kühlkanäle 18 können unterhalb des Kolbenbodens 14 angeordnet sein. Eine Materialstärke des Hauptkörpers 16 zwischen einer Oberseite des Kolbenbodens 14 und den Kühlkanälen 18 kann beispielsweise mindestens 5 mm betragen.

Wie in Figur 1 und 2 dargestellt ist, kann der Kolbenboden 14 eine Kolbenmulde 20 aufweisen. Die Kolbenmulde 20 kann jegliche bekannte Form aufweisen. Beispielsweise kann die Kolbenmulde 20 als eine Stufen-Kolbenmulde, die eine zentrale Erhebung 22 aufweist, ausgebildet sein, wie dargestellt ist. Stufen-Kolbenmulden können insbesondere für einen Dieselbetrieb mit Direkteinspritzung geeignet sein. Der Diesel-Kraftstoff kann beispielsweise von einem zentralen Injektor vorzugsweise symmetrisch in mehrere Einspritzstrahlen aufgeteilt werden, die auf eine umlaufende Oberkante bzw. einen Absatz der Stufen-Kolbenmulde gerichtet sind (vgl. Pfeil A in Figur 1). Die Einspritzstrahlen können dann beim Auftreffen geteilt werden, sodass der Kraftstoff teilweise in die Kolbenmulde 20 und teilweise weg von der Kolbenmulde 20 geleitet wird. Es ist beispielsweise auch möglich, dass die Kolbenmulde 20 anders geformt ist, z. B. als eine Omega-Kolbenmulde.

Der Kolben 10 weist eine Abdeckung 24 auf. Die Abdeckung 24 ist separat von dem Hauptkörper 16 ausgeführt. Vorzugsweise ist die Abdeckung 24 als ein dünnes Blech ausgeführt. Beispielsweise kann die Abdeckung 24 eine Blechdicke in einem Bereich zwischen 0,5 mm und 2 mm aufweisen, vorzugsweise ca. 1 mm. Die Blechdicke des Blechs kann im Wesentlichen konstant sein.

Die Abdeckung 24 kann so ausgeführt sein, dass sie innerhalb der Kolbenmulde 20 angeordnet ist und zweckmäßig nicht über die Kolbenmulde 20 übersteht und/oder bündig mit einer Oberseite des Hauptkörpers 16 ist.

Die Abdeckung 24 ist beabstandet zu dem Kolbenboden 14 angeordnet. Wie dargestellt ist, kann eine Querschnittskontur der Abdeckung 24 einer Kontur der Kolbenmulde 20 folgen, vorzugsweise in im Wesentlichen konstanten Abstand. Beispielsweise kann die Abdeckung 24 zumindest teilweise einen stufenförmigen und/oder omegaförmigen Querschnitt aufweisen, wie die Kolbenmulde 20. Es ist allerdings auch möglich, dass die Abdeckung 24 und/oder der Kolbenboden 14 jegliche andere Form aufweisen, bis hin zu einem ebenen Kolbenboden und einer ebenen Abdeckung.

Zwischen der Abdeckung 24 und dem Kolbenboden 14 ist ein Spalt L gebildet. Der Spalt L wirkt als eine Wärmeisolierung zwischen der Abdeckung 24 und dem Kolbenboden 14. Vorzugsweise ist der Spalt als Luftspalt ausgeführt. Während des Betriebs der Brennkraftmaschine erhitzt sich die Abdeckung 24 sehr stark. Dabei hält die Abdeckung 24 die Flammenfront während der Verbrennung fern von der Kolbenmulde 20. Die Kolbenmulde 20 wird durch die Flamme während der Verbrennung nicht erwärmt. Zusätzlich behindert der Spalt L eine Wärmeleitung von der stark erhitzten Abdeckung 24 zu der Kolbenmulde 20. Zweckmäßig kann so ein Wärmestrom von der Abdeckung 24 zu dem Kolbenboden 14 minimiert werden.

Der Spalt L kann beispielsweise eine Höhe zwischen 0,5 mm und 2 mm aufweisen, vorzugsweise ca. 1 mm. Der Spalt L kann eine im Wesentlichen konstante Höhe aufweisen.

Während der Verbrennung nimmt die Abdeckung 24 Wärme auf, die sie beispielsweise während des Ladungswechsels an die Einlassluft abgibt. Je dünner die Abdeckung 24 ausgeführt ist, desto weniger wird die Ladeluft aufgewärmt und desto weniger wird der Liefergrad der Brennkraftmaschine abgesenkt.

Während der Zündung eines Kraftstoff-Luft-Gemischs in der Verbrennungskammer können hohe Zünddrücke auftreten, zum Beispiel in einem Bereich zwischen 200 bar und 250 bar. Um zu verhindern, dass sich eine dünne Abdeckung 24 beispielsweise während der Zündung des Kraftstoff-Luft-Gemischs verbiegt, steht der Spalt L in Fluidverbindung mit der Verbrennungskammer 12. Fluid kann so zwischen der Verbrennungskammer 12 und dem Spalt L ausgetauscht werden. Über die Fluidverbindung kann ein Druckanstieg in der Verbrennungskammer, zum Beispiel während der Zündung und der Verbrennung von Kraftstoff, auch auf eine Rückseite der Abdeckung 24 wirken. Dadurch wird ein Druckausgleich zwischen der Verbrennungskammer 12 und dem Spalt L ermöglicht. Ein Druck auf einer Vorderseite oder Oberseite der Abdeckung 24 kann im Wesentlichen einem Druck auf einer Rückseite oder Unterseite der Abdeckung 24 entsprechen. Zumindest kann die Fluidverbindung einen Druck auf der Rückseite der Abdeckung 24 einem Druck auf der Vorderseite der Abdeckung 24 annähern.

Dadurch wird eine Verbiegung der Abdeckung 24 durch einen Druckanstieg in der Verbrennungskammer 12 verhindert, ohne dass die Abdeckung 24 hierfür eine große Materialstärke aufweist.

Die Fluidverbindung zwischen der Verbrennungskammer 12 und dem Spalt L kann auf unterschiedliche Weise ausgeführt sein.

Im Ausführungsbeispiel von Figur 1 ist die Abdeckung 24 als ringförmiger Einsatz zum Einsetzen in die Kolbenmulde 20 ausgeführt. Die zentrale Erhebung 22 erstreckt sich durch ein zentrales Durchgangsloch in der Abdeckung 24. Die Abdeckung 24 und die Kolbenmulde 20 sind so miteinander verbunden, dass ein Ringspalt R1 zwischen einer Außenumfangskante 26 der Abdeckung 24 und einer Außenumfangskante 28 der Kolbenmulde 20 gebildet ist. Zusätzlich ist ein Ringspalt R2 zwischen einer Innenumfangskante 30 der Abdeckung 24, das heißt der Umfangskante eines zentralen Durchgangslochs der Abdeckung 24, und einer Umfangsfläche der zentralen Erhebung 22 gebildet. Die Ringspalte R1, R2 bilden eine direkte Fluidverbindung zwischen der Verbrennungskammer 12 und dem Spalt L.

Die Fluidverbindung zwischen der Verbrennungskammer 12 und dem Spalt L ist vorzugsweise so angeordnet, dass sie beabstandet zu einem Kraftstoff-Einspritzstrahl-Auftreffbereich 32 der Abdeckung 24 angeordnet ist. Dadurch kann verhindert werden, dass sich eine durch die Kraftstoff-Einspritzstrahlen bildende Flamme direkt auf die Fluidverbindung trifft und in den Spalt L eindringt, sodass der Kolbenboden 14 erwärmt wird. Diese beabstandete Anordnung zwischen der Fluidverbindung und dem Kraftstoff-Einspritzstrahl-Auftreffbereich 32 kann beispielsweise durch die Ringspalte R1 und R2 vorteilhaft ausgeführt sein.

Figur 2 zeigt weitere zusätzliche oder alternative Möglichkeiten zum Herstellen einer z. B. direkten Fluidverbindung zwischen der Verbrennungskammer 12 und dem Spalt L. Beispielsweise kann die Abdeckung 24 mehrere Durchgangslöcher 34 aufweisen. Der besseren Übersicht halber sind in Figur 2 nur einige der Durchgangslöcher mit dem Bezugszeichen 34 versehen.

Die Durchgangslöcher 34 verbinden eine Vorderseite der Abdeckung 24 mit einer Rückseite der Abdeckung 24, und somit die Verbrennungskammer 12 mit dem Spalt L. Die Durchgangslöcher 34 können verteilt in der Abdeckung 24 angeordnet sein. Vorzugsweise sind die Durchgangslöcher 34 beabstandet von dem Kraftstoff-Einspritzstrahl-Auftreffbereich 32 angeordnet, zum Beispiel oberhalb und unterhalb des ringförmigen Kraftstoff-Einspritzstrahl-Auftreffbereichs 32.

Es ist auch möglich, dass die Abdeckung 24 beispielsweise Durchgangsschlitze oder eine andere innere oder äußere Struktur zum Herstellen der Fluidverbindung zwischen der Verbrennungskammer 12 und dem Spalt L aufweist.

Die Abdeckung 24 kann fest mit der Kolbenmulde 20 verbunden werden. Vorzugsweise sind die Abdeckung 24 und die Kolbenmulde 20 miteinander verschweißt, zum Beispiel mittels Punktschweißen oder Reibschweißen. Bei Verwendung von Reibschweißen zur Anbringung der Abdeckung 24 an die Kolbenmulde 20 können sich voneinander getrennte Bereiche für den Spalt L ergeben. Hier ist zweckmäßig eine Fluidverbindung für jeden Bereich des Spalt L zur Verbindung mit der Verbrennungskammer 12 vorgesehen, zum Beispiel in Form von den Durchgangslöchern 34, wie dargestellt ist.

### Bezugszeichenliste

- 10: Kolben
- 12: Verbrennungskammer
- 14: Kolbenboden
- 16: Hauptkörper
- 18: Kühlkanäle
- 20: Kolbenmulde
- 22: Zentrale Erhebung
- 24: Abdeckung
- 26: Außenumfangskante
- 28: Außenumfangskante
- 30: Innenumfangskante
- 32: Kraftstoff-Einspritzstrahl-Auftreffbereich
- 34: Durchgangsloch

- A: Kraftstoff-Einspritzstrahl-Richtung
- L: Spalt (z. B. Luftspalt)
- R1: Ringspalt
- R2: Ringspalt

## Patentansprüche

1. Kolben (10) für eine Brennkraftmaschine, aufweisend:
einen Kolbenboden (14) zum kolbenseitigen Begrenzen einer Verbrennungskammer (12) der Brennkraftmaschine; und
eine Abdeckung (24), die den Kolbenboden (14) zumindest teilweise abdeckt, wobei zwischen der Abdeckung (24) und dem Kolbenboden (14) ein wärmeisolierender Spalt, vorzugsweise Luftspalt (L), gebildet ist, der in einer Fluidverbindung mit der Verbrennungskammer (12) und/oder einer dem wärmeisolierenden Spalt (L) abgewandten Oberseite der Abdeckung (24) ist,
wobei der Kolbenboden (14) eine Kolbenmulde (20) aufweist und die Abdeckung (24) zumindest teilweise in der Kolbenmulde (20) angeordnet ist und/oder an die Kolbenmulde (20) angepasst ist, und
**dadurch gekennzeichnet, dass**:
die Kolbenmulde (20) als eine Omegamulde und/oder eine Stufenmulde ausgebildet ist und die Abdeckung (24) zumindest teilweise einen omegaförmigen und/oder einen stufenförmigen Querschnitt aufweist; und
die Fluidverbindung zumindest teilweise durch einen Ringspalt (R2) zwischen einer Innenumfangskante (30) der Abdeckung (24) und einer zentralen Erhebung (22) der Kolbenmulde (20) gebildet ist.

2. Kolben (10) nach Anspruch 1, wobei:
die Fluidverbindung zum Ermöglichen einer Druckannäherung und/oder eines Druckausgleichs zwischen der Verbrennungskammer (12) und dem wärmeisolierenden Spalt (L) ausgebildet ist; und/oder
ein Druck auf der Oberseite der Abdeckung (24) und ein Druck auf einer Rückseite der Abdeckung (24), die dem wärmeisolierenden Spalt (L) zugewandt ist, während des Betriebs der Brennkraftmaschine durch die Fluidverbindung angenähert und/oder im Wesentlichen ausgeglichen wird.

3. Kolben (10) nach Anspruch 1 oder Anspruch 2, wobei:
die Abdeckung (24) so angeordnet ist, dass sie eine Flammenfront während einer Verbrennung in der Verbrennungskammer (12) von dem Kolbenboden (14), vorzugsweise einer Kolbenmulde (20) des Kolbenbodens (14), trennt; und/oder
die Fluidverbindung beabstandet zu einem Kraftstoff-Einspritzstrahl-Auftreffbereich (32) der Abdeckung (24) angeordnet ist.

4. Kolben (10) nach einem der vorherigen Ansprüche, wobei:
die Fluidverbindung zumindest teilweise durch mindestens einen Ringspalt (R1, R2) zwischen dem Kolbenboden (14) und der Abdeckung (24) gebildet ist.

5. Kolben (10) nach einem der vorherigen Ansprüche, wobei:
die Fluidverbindung zumindest teilweise durch einen Ringspalt (R1) zwischen einer Außenumfangskante (26) der Abdeckung (24) und dem Kolbenboden (14) gebildet ist; und/oder
die Fluidverbindung zumindest teilweise durch einen Ringspalt (R2) zwischen einer Innenumfangskante (30) der Abdeckung (24) und dem Kolbenboden (14) gebildet ist.

6. Kolben (10) nach einem der vorherigen Ansprüche, wobei:
die Fluidverbindung zumindest teilweise durch mindestens ein Durchgangsloch (34) und/oder mindestens einen Durchgangsschlitz der Abdeckung (24) gebildet ist.

7. Kolben (10) nach Anspruch 6, wobei:
mehrere Durchgangslöcher (34) und/oder mehrere Durchgangsschlitze umfasst sind, die vorzugsweise beabstandet zu einem Kraftstoff-Einspritzstrahl-Auftreffbereich (32) der Abdeckung (24) angeordnet sind.

8. Kolben (10) nach einem der vorherigen Ansprüche, wobei:
der wärmeisolierende Spalt (L) eine Höhe größer oder gleich 0,5 mm und/oder kleiner oder gleich 2 mm, vorzugsweise ca. 1 mm, aufweist; und/oder
der wärmeisolierende Spalt (L) eine im Wesentlichen konstante Höhe aufweist.

9. Kolben (10) nach einem der vorherigen Ansprüche, wobei:
die Abdeckung (24) sich ringförmig um die zentrale Erhebung (22) erstreckt.

10. Kolben (10) nacheinem der vorherigen Ansprüche, wobei:
die Fluidverbindung zumindest teilweise durch einen Ringspalt (R1) zwischen einer Außenumfangskante (28) der Kolbenmulde (20) und einer Außenumfangskante (26) der Abdeckung (24) gebildet ist.

11. Kolben (10) nach einem der vorherigen Ansprüche, wobei:
eine Querschnittskontur der Abdeckung (24) einer Querschnittskontur der Kolbenmulde (20) folgt, vorzugsweise in im Wesentlichen konstanten Abstand.

12. Kolben (10) nach einem der vorherigen Ansprüche, wobei die Abdeckung (24) als ein Blech ausgebildet ist, wobei vorzugsweise:
das Blech eine im Wesentlichen konstante Blechstärke aufweist; und/oder
das Blech eine Blechstärke größer oder gleich 0,5 mm und/oder kleiner oder gleich 2 mm, vorzugsweise ca. 1 mm, aufweist.

13. Kolben (10) nach einem der vorherigen Ansprüche, wobei:
die Abdeckung (24) mit dem Kolbenboden (14), vorzugsweise einer Kolbenmulde (20) des Kolbenbodens (14), verschweißt ist, vorzugsweise mittels Punktschweißen und/oder Reibschweißen.

14. Kraftfahrzeug, vorzugsweise Nutzfahrzeug, aufweisend einen Kolben (10) nach einem der vorherigen Ansprüche.

## Claims

1. A piston (10) for an internal combustion engine, comprising
a piston crown (14) for delimiting a combustion chamber (12) of the internal combustion engine on a piston side; and
a cover (24), which at least partially covers the piston crown (14), wherein a heat-insulating gap, preferably an air gap (L), is formed between the cover (24) and the piston crown (14), the gap being in fluid connection with the combustion chamber (12) and/or with an upper side of the cover (24) facing away from the heat-insulating gap (L),
wherein the piston crown (14) comprises a piston recess (20) and the cover (24) is arranged at least partially in the piston recess (20) and/or is adapted to the piston recess (20), and
**characterised in that**:
the piston recess (20) is configured as an omega-shaped recess and/or a stepped recess, and the cover (24) comprises at least partially an omega-shaped and/or a stepped cross-section; and
the fluid connection is at least partially formed by an annular gap (R2) between an inner circumferential edge (30) of the cover (24) and a central elevation (22) of the piston recess (20).

2. The piston (10) according to claim 1, wherein:
the fluid connection is configured to allow pressure approximation and/or pressure compensation between the combustion chamber (12) and the heat-insulating gap (L); and/or
a pressure on the upper side of the cover (24) and a pressure on a rear side of the cover (24) facing the heat-insulating gap (L) is approximated and/or substantially compensated by the fluid connection during operation of the internal combustion engine.

3. The piston (10) according to claim 1 or claim 2, wherein:
the cover (24) is arranged to separate a flame front from the piston crown (14), preferably from a piston recess (20) of the piston crown (14), during combustion in the combustion chamber (12); and/or
the fluid connection is arranged distant from a fuel injection jet impingement area (32) of the cover (24).

4. The piston (10) according to any one of the preceding claims, wherein:
the fluid connection is at least partially formed by at least one annular gap (R1, R2) between the piston crown (14) and the cover (24)

5. The piston (10) according to any one of the preceding claims, wherein:
the fluid connection is at least partially formed by an annular gap (R1) between an outer circumferential edge (26) of the cover (24) and the piston crown (14); and/or
the fluid connection is at least partially formed by an annular gap (R2) between an inner circumferential edge (30) of the cover (24) and the piston crown (14).

6. The piston (10) according to any one of the preceding claims, wherein:
the fluid connection is at least partially formed by at least one through-hole (34) and/or at least one through-slit of the cover (24).

7. The piston (10) according to claim 6, wherein:
a plurality of through-holes (34) and/or a plurality of through-slits are comprised, which are preferably arranged at a distance from a fuel injection jet impingement area (32) of the cover (24).

8. The piston (10) according to any one of the preceding claims, wherein:
the heat-insulating gap (L) has a height greater than or equal to 0.5 mm and/or less than or equal to 2 mm, preferably about 1 mm; and/or
the heat-insulating gap (L) has a substantially constant height.

9. The piston (10) according to any one of the preceding claims, wherein:
the cover (24) extends annularly around the central elevation (22).

10. The piston (10) according to any one of the preceding claims, wherein:
the fluid connection is at least partially formed by an annular gap (R1) between an outer circumferential edge (28) of the piston recess (20) and an outer circumferential edge (26) of the cover (24).

11. The piston (10) according to any one of the preceding claims, wherein:
a cross-sectional contour of the cover (24) follows a cross-sectional contour of the piston recess (20), preferably at a substantially constant distance.

12. The piston (10) according to any one of the preceding claims, wherein the cover (24) is formed as a sheet metal, wherein preferably:
the sheet metal has a substantially constant sheet thickness; and/or
the sheet metal has a sheet thickness greater than or equal to 0.5 mm and/or less than or equal to 2 mm, preferably about 1 mm.

13. The piston (10) according to any one of the preceding claims, wherein:
the cover (24) is welded to the piston crown (14), preferably to a piston recess (20) of the piston crown (14), preferably by means of spot welding and/or friction welding.

14. A motor vehicle, preferably a commercial vehicle, comprising a piston (10) according to one of the preceding claims.

## Revendications

1. Piston (10) pour un moteur à combustion interne, présentant :
un fond de piston (14) permettant de délimiter, côté piston, une chambre de combustion (12) du moteur à combustion interne ; et
un couvercle (24) qui recouvre le fond de piston (14) au moins partiellement, dans lequel un espace, de préférence un espace d'air (L), thermo-isolant, est formé entre le couvercle (24) et le fond de piston (14), lequel espace est en liaison fluidique avec la chambre de combustion (12) et/ou un côté supérieur, opposé à l'espace (L) thermo-isolant, du couvercle (24),
dans lequel le fond de piston (14) présente une cavité de piston (20) et le couvercle (24) est disposé au moins partiellement dans la cavité de piston (20) et/ou est adapté à la cavité de piston (20), et
**caractérisé en ce que** :
la cavité de piston (20) est réalisée sous la forme d'une cavité en oméga et/ou d'une cavité étagée et le couvercle (24) présente au moins partiellement une section transversale en forme d'oméga et/ou étagée ; et
la liaison fluidique est formée au moins partiellement par un espace annulaire (R2) entre un bord périphérique intérieur (30) du couvercle (24) et un rehaussement (22) central de la cavité de piston (20).

2. Piston (10) selon la revendication 1, dans lequel :
la liaison fluidique est réalisée pour permettre un rapprochement de pression et/ou une égalisation de pression entre la chambre de combustion (12) et l'espace (L) thermo-isolant ; et/ou
une pression sur le côté supérieur du couvercle (24) et une pression sur un côté arrière du couvercle (24), lequel côté arrière est tourné vers l'espace (L) thermo-isolant, sont rapprochées et/ou sensiblement égalisées par le biais de la liaison fluidique pendant le fonctionnement du moteur à combustion interne.

3. Piston (10) selon la revendication 1 ou la revendication 2, dans lequel :
le couvercle (24) est disposé de telle sorte qu'il sépare un front de flamme pendant une combustion dans la chambre de combustion (12) du fond de piston (14), de préférence d'une cavité de piston (20) du fond de piston (14) ; et/ou
la liaison fluidique est disposée de manière espacée d'une zone d'impact de jet d'injection de carburant (32) du couvercle (24).

4. Piston (10) selon l'une des revendications précédentes, dans lequel :
la liaison fluidique est formée au moins partiellement par au moins un espace annulaire (R1, R2) entre le fond de piston (14) et le couvercle (24).

5. Piston (10) selon l'une des revendications précédentes, dans lequel :
la liaison fluidique est formée au moins partiellement par un espace annulaire (R1) entre un bord périphérique extérieur (26) du couvercle (24) et le fond de piston (14) ; et/ou
la liaison fluidique est formée au moins partiellement par un espace annulaire (R2) entre un bord périphérique intérieur (30) du couvercle (24) et le fond de piston (14).

6. Piston (10) selon l'une des revendications précédentes, dans lequel :
la liaison fluidique est formée au moins partiellement par au moins un trou de passage (34) et/ou au moins une fente de passage du couvercle (24).

7. Piston (10) selon la revendication 6, dans lequel :
plusieurs trous de passage (34) et/ou plusieurs fentes de passage sont prévus, lesquels sont disposés de préférence de manière espacée d'une zone d'impact de jet d'injection de carburant (32) du couvercle (24).

8. Piston (10) selon l'une des revendications précédentes, dans lequel :
l'espace (L) thermo-isolant présente une hauteur supérieure ou égale à 0,5 mm et/ou inférieure ou égale à 2 mm, de préférence d'environ 1 mm ; et/ou
l'espace (L) thermo-isolant présente une hauteur sensiblement constante.

9. Piston (10) selon l'une des revendications précédentes, dans lequel :
le couvercle (24) s'étend de manière annulaire autour du rehaussement (22) central.

10. Piston (10) selon l'une des revendications précédentes, dans lequel :
la liaison fluidique est formée au moins partiellement par un espace annulaire (R1) entre un bord périphérique extérieur (28) de la cavité de piston (20) et un bord périphérique extérieur (26) du couvercle (24).

11. Piston (10) selon l'une des revendications précédentes, dans lequel :
un contour de section transversale du couvercle (24) suit un contour de section transversale de la cavité de piston (20), de préférence à distance sensiblement constante.

12. Piston (10) selon l'une des revendications précédentes, dans lequel le couvercle (24) est réalisé sous la forme d'une tôle, dans lequel de préférence :
la tôle présente une épaisseur de tôle sensiblement constante ; et/ou
la tôle présente une épaisseur de tôle supérieure ou égale à 0,5 mm et/ou inférieure ou égale à 2 mm, de préférence d'environ 1 mm.

13. Piston (10) selon l'une des revendications précédentes, dans lequel :
le couvercle (24) est soudé sur le fond de piston (14), de préférence sur une cavité de piston (20) du fond de piston (14), de préférence par soudage par points et/ou soudage par friction.

14. Véhicule automobile, de préférence véhicule utilitaire, présentant un piston (10) selon l'une des revendications précédentes.
